# EUROPEAN PATENT SPECIFICATION

(11) **EP 2 631 510 B1**
(45) Date of publication and mention of the grant of the patent: **07.08.2019**
(21) Application number: 12156352.2
(22) Date of filing: 21.02.2012
(51) Int. Cl.: F16H 59/02, F16H 63/42

(54) **Gear shift lever knob**
Schalthebelknopf
Pommeau de levier de vitesses

(43) Date of publication of application: 28.08.2013
(73) Proprietor: Volvo Car Corporation, 40 531 Göteborg (SE)
(72) Inventor: Göthlin, Jonas, 42343 Torslanda (SE); Persson, Sven-Olof, 43537 Mölnlycke (SE); Bergström, Anders, 41123 Göteborg (SE); Ernstsson, Axel, 423 51 Torslanda (SE)
(74) Representative: Valea AB

(56) References cited:
- WO-A2-2010/039845
- GB-A- 2 381 059
- JP-A- 2007 203 823
- US-A1- 2004 095 778

## Description

### TECHNICAL FIELD

The present disclosure relates to a gear shift lever knob and a gear shift lever comprising such a gear shift lever knob.

### BACKGROUND

A gear shift lever may be used in a vehicle for shifting gears. The upper end of a gear shift lever is normally provided with a gear shift lever knob in order to make the operation of the gear shift lever easy. In addition, the gear shift lever knob may be provided with information, e.g. a graphic showing the positions of the gears.

It is known from e.g. document US 2004/0095778 A1 to use a gear shift lever knob comprising a knob body having a knob cavity within the knob body. The knob cavity has an opening which is covered by a cover made of transparent material, which may have a coating of a phosphorous paint on its underside. The knob cavity is used for housing an illumination means, such as a LED, wiring for supply the illumination means with electric energy and possibly also a battery. It is not desirable that these items are visible from the outside of the gear shift lever knob, so the knob body is thus made of an opaque material in order to hide what is housed in the cavity.

Document DE 20 2004 006 678 U1 discloses a gear shift lever knob made of glass or similar material. The gear shift lever knob has the form of a sphere with truncated underside. Alternative forms and materials are proposed, such as the form of an egg, a zeppelin or a knob.

A drawback of the gear shift lever knob according to DE 20 2004 006 678 U1 is that it may break if the vehicle is involved in a collision situation. The gear shift lever knob may then fly around in the vehicle compartment like a projectile. If the gear shift lever knob is made of a brittle material such as glass, as suggested in DE 20 2004 006 678 U1, it may expose sharp edges if it breaks. There is then a risk that a driver or passenger may be injured by those sharp edges.

In addition, there is a risk that, dependent on the shape of the gear shift lever knob of DE 20 2004 006 678 U1, it may undesirably function as burning glass if the vehicle is exposed to sunshine, since the sun rays may be concentrated by the gear shift lever knob functioning as a burning glass. In unlucky circumstances, there is then a risk that a fire could start in the vehicle.

Document JP 2007203823 A relates to a gear shift lever knob comprising a transparent member, forming a cover, and a frame enclosing the transparent member.

### SUMMARY

The object of the present disclosure is to overcome or ameliorate at least one of the disadvantages of the prior art, or to provide a useful alternative.

The object above may be achieved by the subject-matter of claim 1.

Thus, in a first aspect of the present invention there is provided a gear shift lever knob comprising
- a knob body forming a main portion of the gear shift lever knob, the knob body being made of a first material, which allows light to pass through, and
- a frame at least partly enclosing the knob body, such that the knob body is externally visible, the frame being made of a second material being different from the first material. By using two different materials, it is possible to make use of desired properties of each material.

The knob body forms a main portion of the gear shift lever knob, i.e. at least 50% of it, preferably at least 65% and most preferably at least 80%. The main portion relates to the main portion of the volume of the of the gear shift lever knob.

The first material allows light to pass through. It may be transparent, i.e. letting light straight through, or it may be translucent, i.e. only allowing light to pass through diffusely. The knob body may thus be used to guide light, e.g. from an illumination source on the underside of the knob body up to the external surfaces of the knob body, which are seen by the driver and potential passengers of a vehicle, wherein the gear shift lever knob is used. This makes the knob body easy to see when it is dark in the vehicle.

The second material is used to form a frame, which at least partly encloses the knob body. The frame may have a closed circumference forming an open area within the frame, through which the knob body is visible. The frame may also have an open circumference. In either case, the frame may be used to form a cage enclosing the knob body, thereby keeping the knob body in position and/or protecting the knob body, in particular its edges and/or corners. In such a case, an easily formable second material can be used to enclose a knob body of a first material, which is less formable, e.g. due to brittleness, but having other desirable properties such as transparency and/or scratch resistance. Thereby, the gear shift lever knob according to the invention takes advantage of the material properties of each material.

The frame may be located in relation to the knob body, such that it reduces the risk of the knob body functioning as a lens of a burning glass. For example, if the knob body comprises at least one edge or rounded-off edge, the frame may be arranged to at least partly cover the edge or rounded-off edge, thereby reducing the above-mentioned burning glass effect.

The knob body is externally visible. A driver of a vehicle, wherein the gear shift lever knob is mounted, may thus see the knob body from the outside of the gear shift lever knob without having to dismantle it. The frame hence does not cover the whole surface of the knob body. Preferably, the knob body is visible from more than one side of the gear shift lever knob.

The knob body may form a massive body. Alternatively, the knob may comprise one or more cavities or form a shell. In that case, the cavities may be in connection with the external environment of the knob body or they may be completely enclosed by the knob body. The knob body may for example be constituted by a shell having a cavity/cavities filled with air. Such a knob body weighs less than a massive one having the same size. On the other hand, a massive body will have a higher mechanical strength than a shell.

The first material may be selected to be scratch resistant. The scratch resistance may be tested by Mohs scale of hardness characterizing various materials, typically minerals, by the ability of a harder material to scratch a softer material. The higher the number is, the more scratch resistant is the material. The first material of the knob body may have a Mohs hardness higher than 3, preferably higher than 4 and most preferably higher than 5. By selecting a scratch resistant material for the knob body, the risk of scratching the knob body for example by rings on the driver's hand is reduced or avoided.

In addition, or as a complement, a first material having good optical properties may be selected. It may for example have a substantially full transparency, i.e. substantially not absorbing or scattering the light, but transmitting substantially all of the light straight through the knob body.

The first material may be glass, preferably crystal glass. Glass is known to be scratch resistant, typically having a Mohs hardness between 5 and 6 for crystal glass. In addition, glass has advantageous optical properties.

The second material may be selected to be a shock-resistant material. Thereby the frame is suitable for receiving a possible impact in case the vehicle, wherein the gear shift lever knob is mounted, is subjected to a collision. The frame could hence protect the knob body. The second material may be metal or plastic.

In an embodiment, a knob body of glass, e.g. crystal glass, is combined with a frame made of metal or plastic.

The knob body may be arranged in the frame, such that light can pass through the gear shift lever knob from one side to another, for example from a side directed towards the driver to the side directed towards the front of the vehicle, from one lateral side to another, or from the side directed towards the driver to one of the lateral sides, where the mentioned positions of the sides refer to when the gear shift lever knob is mounted in the vehicle. Lateral side is referring to a lateral direction of a vehicle, i.e. the direction being transverse to the longitudinal direction of the vehicle.

The knob body may comprise at least one edge or rounded-off edge, the frame being arranged to at least partly cover the at least one edge or rounded-off edge. The frame may further leave one or more of the flat surfaces of the knob body uncovered, such that they are externally visible. The edges may meet in corners, which also may be covered by the frame. This arrangement is for example advantageous if the first material is made of a brittle material, such as glass, since the frame will protect the edges and in particular any corners, which otherwise would be susceptible for being broken off. There may otherwise be a risk of chipping of the edge of the knob body, a risk which is reduced or avoided by using the frame.

In an embodiment, the gear shift lever knob substantially has the shape of a hexahedron, preferably with rounded-off edges. A hexahedron is a polyhedron with six faces. Hex is the Greek word for six, and hedron is the Greek word for face. This shape has been found to make the gear shift lever knob easy to operate. The hexahedron may comprise two opposite lateral sides, each side substantially having the shape of a trapezium. The hexahedron may for example have the shape of a parallelepiped.

In an embodiment, the knob body is a massive hexahedron made of glass.

The knob body may comprise a surface portion adapted to present information, such as a graphic illustrating the positions of the gears or the brand of the vehicle. The surface portion adapted to present information may be essentially rectangular and is preferably located on the side of the gear shift lever knob, which will be directed towards the driver, when the gear shift lever knob is mounted in a vehicle.

The knob body may comprise at least one surface portion completely surrounded by the frame. The surface portion may extend over one, two or three sides of the knob body, e.g. in case it has the shape of a hexahedron.

A surface portion of the knob body may have an immersed position in relation to the adjacent frame. Thereby the surface portion is more protected, as compared to if the surface portion would have been flush with the surface of the adjacent frame or even protruding from the adjacent frame.

In a second aspect of the present invention there is provided a gear-shift lever comprising a gear shift lever knob according to any one of the previous claims.

The knob body may be illuminated by an illumination means located at a bottom side of the knob body, the illumination means being a part of the gear shift lever. Since the knob body allows light to pass through, it may be used as a light guide, bringing light from the illumination means on the underside of the knob body up to the external surfaces of the knob body, which are seen by the driver and potential passengers of a vehicle, wherein the gear shift lever knob is mounted. This makes the knob body easy to see when it is dark in the vehicle.

In a third aspect of the present invention there is provided a vehicle comprising such a gear shift lever knob.

### BRIEF DESCRIPTION OF THE DRAWINGS

The present invention will hereinafter be further explained by means of non-limiting examples with reference to the appended drawing wherein:

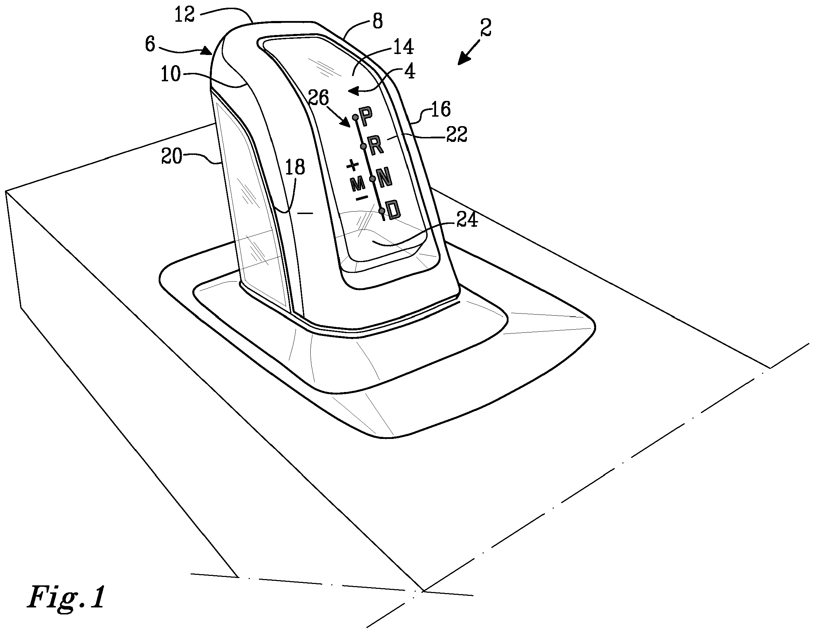

- Fig. 1: is a schematic view of a gear shift lever knob according to the invention.

It should be noted that the appended drawing is not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

Figure 1 schematically illustrates a gear shift lever knob 2 according to a first embodiment of the invention being a part of a gear shift lever. The gear shift lever knob 2 comprises a knob body 4 and a frame 6 surrounding the knob body 4. The exemplary embodiment shows a gear shift lever knob for an automatic transmission but the gear shift lever knob could also be used for a manual transmission.

The main portion of the gear shift lever knob 2 is constituted by the knob body 4, which in this exemplary embodiment is made of massive crystal glass. Glass is known to be scratch resistant. In addition glass has good optical properties. It is for example easy to see through the knob body 4.

The gear shift lever knob 2 has the general shape of a hexahedron. The gear shift lever knob 2 may substantially be a parallelepiped as illustrated in Figure 1. As may be gleaned from Figure 1, the edges 8, 10, 12, 14, 16, 18 are rounded-off, such that there are no sharp edges or corners, which could cause reduced comfort for a hand gripping the gear shift lever knob 2.

The frame 6 is arranged to form a plurality of the edges of the gear shift lever knob 2, thereby covering the edges of the knob body 4. In the exemplary embodiment five of the edges, 8, 10, 12, 16, 18 are formed by the frame 6. The frame 6 also extends along a portion of the bottom of the gear shift lever knob 2. Thereby a surface portion 24 is formed, which is completely surrounded by the frame 6. The surface portion 24 extends over two sides of the hexahedron. This means that the edge 14 is not covered by the frame 6, instead the edge 14 has been formed with a rounded profile, such that the edge 14 is smooth when gripping the gear shift lever knob 2. The surface portion 24 is further adapted to present information to the driver, e.g. a graphic 26 illustrating the positions of the gears. The surface portion 24 is immersed in relation to the surrounding frame 6. Thereby the surface portion 24 is more protected, as compared to if the glass surface would have been flush with the frame surface.

An illumination means (not illustrated) may be located below the gear shift lever knob 2 forming part of the gear shift lever. Since the knob body 4 is transparent, it may be used as a light guide, bringing light from the illumination means on the underside of the knob body 4 up to the external surfaces of the knob body 4, which are seen by the driver and potential passengers of a vehicle, wherein the gear shift lever knob 2 is used. This makes the knob body 4 easy to see when it is dark in the vehicle.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A gear shift lever knob (2) comprising
- a knob body (4) forming a portion of said gear shift lever knob (2), said knob body (4) being made of a first material, which allows light to pass through, and
- a frame (6) at least partly enclosing said knob body (4), such that said knob body (4) is externally visible, said frame (6) being made of a second material being different from the first material,
**characterized in that**
said knob body (4) forms at least 50% of the volume of said gear shift lever knob (2).

2. The gear shift lever knob (2) according to claim 1, wherein said knob body (4) forms a massive body.

3. The gear shift lever knob (2) according to claim 1 or 2, wherein said first material is scratch resistant, for example having a Mohs hardness higher than 3, preferably higher than 4 and most preferably higher than 5.

4. The gear shift lever knob (2) according to any one of the previous claims, wherein said first material is glass, preferably crystal glass.

5. The gear shift lever knob (2) according to any one of the previous claims, wherein said second material is a shock-resistant material, such as metal or plastic.

6. The gear shift lever knob (2) according to any one of the previous claims, wherein said knob body (4) is arranged in said frame (6), such that light can pass through said gear shift lever knob (2) from one side to another.

7. The gear shift lever knob (2) according to any one of the previous claims, wherein said knob body (4) comprises at least one edge or rounded-off edge, said frame (6) being arranged to at least partly cover said at least one edge or rounded-off edge.

8. The gear shift lever knob (2) according to any one of the previous claims, wherein said gear shift lever knob (2) substantially has the shape of a hexahedron, preferably with rounded-off edges.

9. The gear shift lever knob (2) according to claim 8, wherein said hexahedron comprises two opposite lateral sides, each one substantially having the shape of a trapezium.

10. The gear shift lever knob (2) according to any one of the previous claims, wherein said knob body (4) comprises a surface portion (24) adapted to present information, which surface portion (24) is located on the side of said gear shift lever knob (2), which will be directed towards the driver, when said gear shift lever knob (2) is mounted in a vehicle.

11. The gear shift lever knob (2) according to any one of the previous claims, wherein a surface portion of said knob body (4) has an immersed position in relation to the adjacent frame (6).

12. The gear shift lever knob (2) according to any one of the previous claims, wherein said knob body (4) comprises at least one surface portion (24) completely surrounded by said frame (6).

13. The gear shift lever knob (2) according to claim 12, when dependent on claim 8 or 9, wherein said surface portion (24) completely surrounded by said frame (6) extends over two sides of said hexahedron.

14. A gear shift lever comprising a gear shift lever knob (2) according to any one of the previous claims.

15. The gear shift lever according to claim 14, wherein said gear shift lever further comprises an illumination means located at a bottom side of said knob body (4), said knob body (4) being illuminated by said illumination means.

## Patentansprüche

1. Schalthebelknauf (2), Folgendes umfassend:
- einen Knaufkörper (4), der einen Teil des Schalthebelknaufs (2) bildet, wobei der Knaufkörper (4) aus einem ersten, lichtdurchlässigen Material hergestellt ist, und
- einen Rahmen (6), der den Knaufkörper (4) zumindest teilweise umgibt, sodass der Knaufkörper (4) nach außen sichtbar ist, wobei der Rahmen (6) aus einem zweiten Material hergestellt ist, das sich von dem ersten Material unterscheidet,
**dadurch gekennzeichnet, dass**
der Knaufkörper (4) mindestens 50 % des Volumens des Schalthebelknaufs (2) ausmacht.

2. Schalthebelknauf (2) nach Anspruch 1, wobei der Knaufkörper (4) einen massiven Körper ausbildet.

3. Schalthebelknauf (2) nach Anspruch 1 oder 2, wobei das erste Material kratzfest ist, zum Beispiel eine Mohs-Härte von mehr als 3, bevorzugt mehr als 4 und am stärksten bevorzugt mehr als 5 aufweist.

4. Schalthebelknauf (2) nach einem der vorstehenden Ansprüche, wobei das erste Material Glas, bevorzugt Kristallglas ist.

5. Schalthebelknauf (2) nach einem der vorstehenden Ansprüche, wobei das zweite Material ein schlagfestes Material wie Metall oder Kunststoff ist.

6. Schalthebelknauf (2) nach einem der vorstehenden Ansprüche, wobei der Knaufkörper (4) so im Rahmen (6) angeordnet ist, dass Licht von einer Seite zur anderen durch den Schalthebelknauf (2) durchtreten kann.

7. Schalthebelknauf (2) nach einem der vorstehenden Ansprüche, wobei der Knaufkörper (4) mindestens eine Kante oder abgerundete Kante umfasst, wobei der Rahmen (6) dazu angeordnet ist, die mindestens eine Kante oder abgerundete Kante zumindest teilweise abzudecken.

8. Schalthebelknauf (2) nach einem der vorstehenden Ansprüche, wobei der Schalthebelknauf (2) im Wesentlichen hexaederförmig ist, bevorzugt mit abgerundeten Kanten.

9. Schalthebelknauf (2) nach Anspruch 8, wobei das Hexaeder zwei gegenüberliegende Seitenflächen aufweist, die jeweils im Wesentlichen trapezförmig sind.

10. Schalthebelknauf (2) nach einem der vorstehenden Ansprüche, wobei der Knaufkörper (4) einen Flächenabschnitt (24) umfasst, der dazu angepasst ist, Informationen anzuzeigen, wobei sich der Flächenabschnitt (24) auf der Seite des Schalthebelknaufs (2) befindet, die dem Fahrer zugewandt ist, wenn der Schalthebelknauf (2) in einem Fahrzeug montiert ist.

11. Schalthebelknauf (2) nach einem der vorstehenden Ansprüche, wobei ein Flächenabschnitt des Knaufkörpers (4) in Bezug zum angrenzenden Rahmen (6) eine abgesenkte Position aufweist.

12. Schalthebelknauf (2) nach einem der vorstehenden Ansprüche, wobei der Knaufkörper (4) mindestens einen Flächenabschnitt (24) umfasst, der vollständig vom Rahmen (6) umgeben ist.

13. Schalthebelknauf (2) nach Anspruch 12, in Abhängigkeit von Anspruch 8 oder 9, wobei sich der Flächenabschnitt (24), der vom Rahmen (6) vollständig umgeben ist, über zwei Seiten des Hexaeders erstreckt.

14. Schalthebel, einen Schalthebelknauf (2) nach einem der vorstehenden Ansprüche umfassend.

15. Schalthebel nach Anspruch 14, wobei der Schalthebel ferner eine Beleuchtungseinrichtung umfasst, die sich auf der Unterseite des Knaufkörpers (4) befindet, wobei der Knaufkörper (4) von der Beleuchtungseinrichtung beleuchtet wird.

## Revendications

1. Pommeau de levier de changement de vitesses (2), comprenant
- un corps de pommeau (4) formant une partie dudit pommeau de levier de changement de vitesses (2), ledit corps de pommeau (4) étant fabriqué en un premier matériau qui permet le passage de la lumière, et
- un cadre (6) entourant au moins en partie ledit corps de pommeau (4) de telle sorte que ledit corps de pommeau (4) soit visible depuis l'extérieur, ledit cadre (6) étant fabriqué en un deuxième matériau qui est différent du premier matériau,
**caractérisé en ce que**
ledit corps de pommeau (4) constitue au moins 50 % du volume dudit pommeau de levier de changement de vitesses (2).

2. Pommeau de levier de changement de vitesses (2) selon la revendication 1, dans lequel ledit corps de pommeau (4) forme un corps massif.

3. Pommeau de levier de changement de vitesses (2) selon la revendication 1 ou 2, dans lequel ledit premier matériau est résistant aux griffures, par exemple ayant une dureté Mohs supérieure à 3, de préférence supérieure à 4 et plus préférablement supérieure à 5.

4. Pommeau de levier de changement de vitesses (2) selon l'une quelconque des revendications précédentes, dans lequel ledit premier matériau est du verre, de préférence du verre de cristal.

5. Pommeau de levier de changement de vitesses (2) selon l'une quelconque des revendications précédentes, dans lequel ledit deuxième matériau est un matériau résistant aux chocs, tel que du métal ou du plastique.

6. Pommeau de levier de changement de vitesses (2) selon l'une quelconque des revendications précédentes, dans lequel ledit corps de pommeau (4) est disposé dans ledit cadre (6) de telle sorte que la lumière puisse passer d'un côté à l'autre à travers ledit pommeau de levier de changement de vitesses (2).

7. Pommeau de levier de changement de vitesses (2) selon l'une quelconque des revendications précédentes, dans lequel ledit corps de pommeau (4) comprend au moins un bord ou un bord arrondi, ledit cadre (6) étant prévu pour recouvrir au moins en partie ledit au moins un bord ou bord arrondi.

8. Pommeau de levier de changement de vitesses (2) selon l'une quelconque des revendications précédentes, ledit pommeau de levier de changement de vitesses (2) ayant sensiblement la forme d'un hexaèdre, de préférence avec des bords arrondis.

9. Pommeau de levier de changement de vitesses (2) selon la revendication 8, dans lequel ledit hexaèdre comprend deux côtés latéraux opposés, chacun ayant sensiblement la forme d'un trapèze.

10. Pommeau de levier de changement de vitesses (2) selon l'une quelconque des revendications précédentes, dans lequel ledit corps de pommeau (4) comprend une partie de surface (24) prévue pour présenter des informations, ladite partie de surface (24) étant située du côté dudit pommeau de levier de changement de vitesses (2) qui sera tourné vers le conducteur lorsque ledit pommeau de levier de changement de vitesses (2) est monté dans un véhicule.

11. Pommeau de levier de changement de vitesses (2) selon l'une quelconque des revendications précédentes, dans lequel une partie de surface dudit corps de pommeau (4) présente une position immergée par rapport au cadre adjacent (6).

12. Pommeau de levier de changement de vitesses (2) selon l'une quelconque des revendications précédentes, dans lequel ledit corps de pommeau (4) comprend au moins une partie de surface (24) complètement entourée par ledit cadre (6).

13. Pommeau de levier de changement de vitesses (2) selon la revendication 12 lorsqu'elle dépend de la revendication 8 ou 9, dans lequel ladite partie de surface (24) complètement entourée par ledit cadre (6) s'étend sur deux côtés dudit hexaèdre.

14. Levier de changement de vitesses comprenant un pommeau de levier de changement de vitesses (2) selon l'une quelconque des revendications précédentes.

15. Levier de changement de vitesses selon la revendication 14, ledit levier de changement de vitesses comprenant en outre un moyen d'éclairage situé au niveau d'un côté inférieur dudit corps de pommeau (4), ledit corps de pommeau (4) étant éclairé par ledit moyen d'éclairage.
